# EUROPEAN PATENT SPECIFICATION

(11) **EP 1 992 979 B1**
(45) Date of publication and mention of the grant of the patent: **18.01.2012**
(21) Application number: 07425291.7
(22) Date of filing: 18.05.2007
(51) Int. Cl.: G02B 27/01

(54) **Head-up display device for motor-vehicles**
Einspiegelungssichtgerät für ein Fahrzeug
Dispositif de visualisation tête haute pour un véhicule à moteur

(43) Date of publication of application: 19.11.2008
(73) Proprietor: Magneti Marelli S.p.A., 20011 Corbetta (MI) (IT)
(72) Inventor: Campinoti, Daniele, 10078 Venaria Reale (Torino) (IT); De La Pierre, Piero, 10078 Venaria Reale (Torino) (IT)
(74) Representative: Notaro, Giancarlo

(56) References cited:
- EP-A- 0 312 117
- EP-A- 0 377 773
- EP-A- 0 643 315
- WO-A-80/00499
- JP-A- 61 238 015
- US-A- 5 504 622
- US-A- 5 752 766
- US-A1- 2002 149 494
- US-B1- 6 617 786

## Description

The present invention relates to head-up display devices for motor vehicles of the type indicated in the preamble of claim 1. A device of this type is known from EP-A-0312117,

The purpose of the present invention is to provide a device of the head-up type that presents an extremely simple structure, without using lenses and/or mirrors in the optical path, is of low cost and far from cumbersome, and even so guarantees a relatively efficient and reliable operation.

With a view to achieving said purpose, the subject of the invention is a device having the features of claim 1.

According to a further preferred characteristic, in order to prevent undesirable reflections on the windscreen of the motor vehicle when the LED display is turned off, as well as to improve the appearance of the dashboard, a filter is provided above the LED display, which is designed to be traversed only by the radiation having a wavelength corresponding to the light emission of the LEDs and/or darkened, i.e., such as to hide from view the LED display when the latter is not active.

Thanks to the characteristics referred to above, it is possible to obtain a display of the head-up type with extremely simple and low-cost means, which moreover do not involve particularly large overall dimensions within the motor-vehicle dashboard, unlike the head-up display devices generally used so far on board motor vehicles.

Further characteristics and advantages of the invention will emerge from the ensuing description with reference to the annexed plates of drawings, which are provided purely by way of non-limiting example, and in which:
- Figures 1 and 2 are two partial perspective views, from inside and from outside, of the windscreen and of the dashboard of a motor vehicle provided with a device according to the invention;
- Figure 3 is a schematic cross-sectional view that shows the device according to the invention;
- Figure 4 illustrates a variant of Figure 3 for improving the aesthetic appearance and/or eliminating the undesired reflections from the LED display directly to the driver; and
- Figures 5 and 6 are diagrams illustrating the working principle of the display device according to the invention.

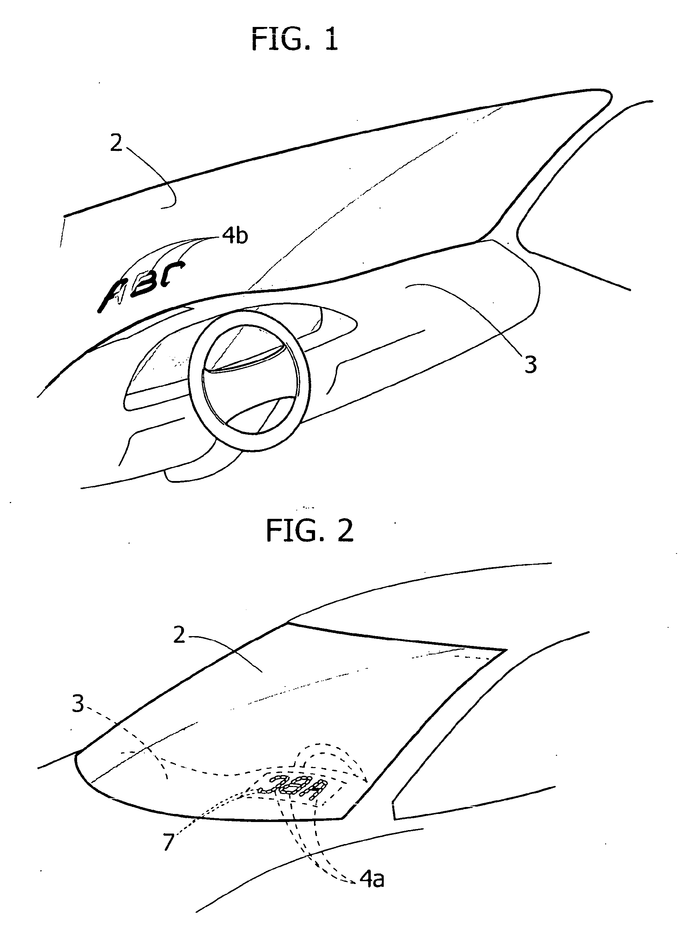

With reference to Figures 1-3, the reference number 1 designates a motor vehicle comprising a windscreen 2 and a dashboard 3, on the top surface of which 3a a LED display device 4 is provided made in any known way and typically constituted by a printed-circuit panel, which is flexible, and appropriately painted, and carries a plurality of LEDs. In a first embodiment, the LEDs are arranged according to predetermined configurations of the letters, numbers or symbols that it is desired to display. As an alternative, or in addition, to said embodiment it is possible to envisage an array constituted by a number of rows and columns of LEDs controlled by an electronic control unit in such a way as to be able to generate a plurality of different images and/or letters, numbers or symbols. The details of embodiment of the LED display are not described and illustrated herein, since they can be obtained in any known way, and in so far as said details, taken in themselves, do not fall within the scope of the present invention. The elimination of the aforesaid details from the drawings moreover renders the latter more readily and easily understandable.

When the display 4 is turned on for displaying one or more predetermined symbols 4a, the light rays 5 emitted by the LEDs are sent directly against the internal surface 2a of the windscreen 2 and reflected therefrom in rays 6 directed towards the driver. In this way, the driver sees the images 4b of the aforesaid symbols displayed on the windscreen 2.

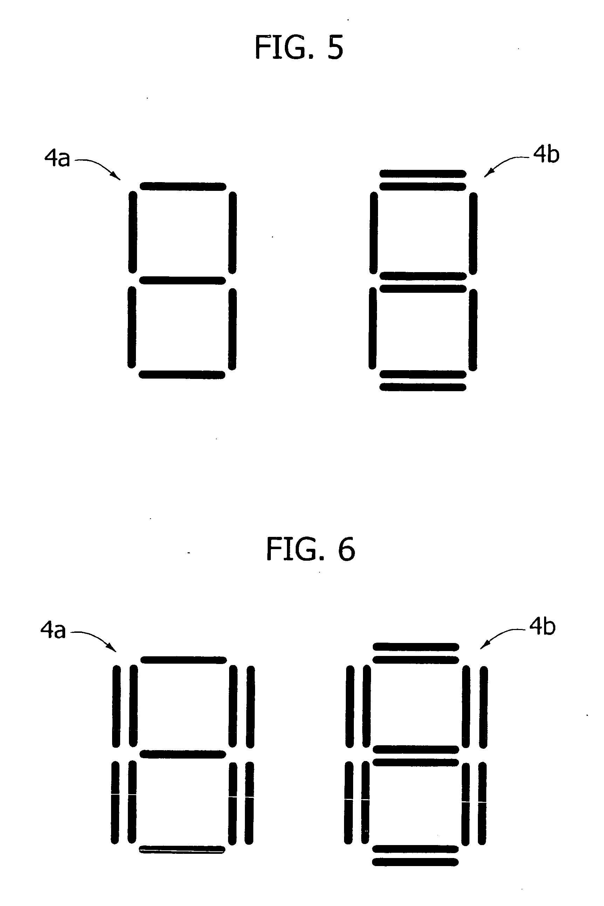

According to an important characteristic of the present invention, the LEDs of the LED display device 4 (each designated by 7 in Figure 2) are arranged and/or controlled by the electronic control unit so that the image obtained after reflection on the windscreen 2 is the desired one. In providing said arrangement and control, the optical alteration is taken into account that is due to the fact that part of the light rays 5 is immediately reflected on the internal surface 2a of the windscreen 2, whilst a further part of said rays traverses the thickness of the windscreen and is reflected on the external surface of the windscreen in the direction of the driver, a remaining part of the light rays escaping outside the windscreen. Following upon the double reflection on the two opposite faces of the windscreen, an image 4a of the type illustrated on the left in Figure 5 gives rise to a vertically doubled image, of the type designated by 4b on the right in Figure 5. According to the invention, the LEDs 7 are arranged and/or controlled in such a way as to exploit the aforesaid optical alteration to obtain the image that it is desired to make visible to the driver. For example, with reference to Figure 6, the arrangement of the LEDs 7 is such as to generate at the origin an image 4a of the type illustrated on the left in Figure 6 (vertical double lines) so that, following upon the double reflection on the two opposite surfaces of the windscreen, the driver sees on the windscreen an image 4b of the type illustrated on the right in Figure 6, where the double reflection has been exploited to obtain a symbol with contours of greater thickness.

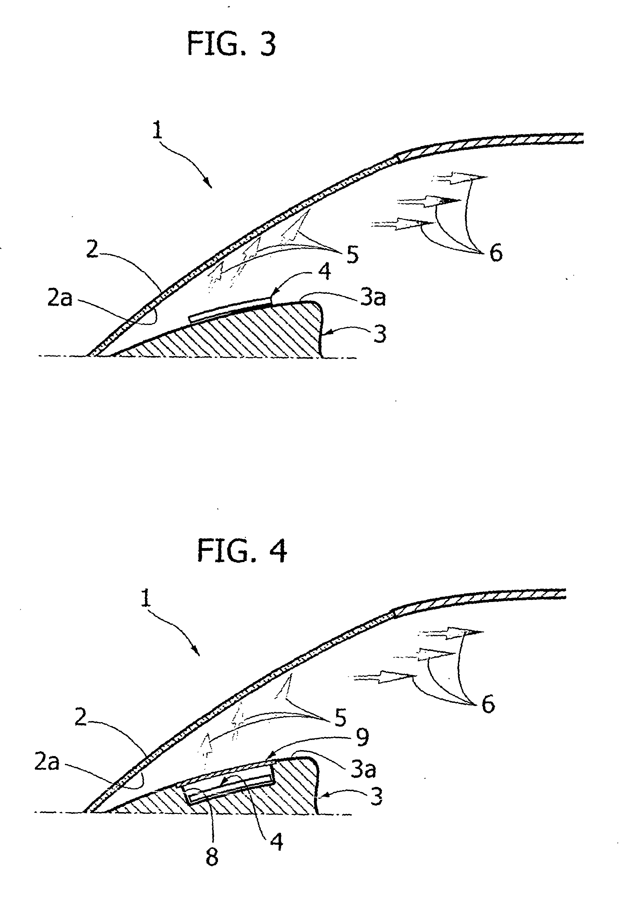

Figure 4 illustrates a variant in which the panel of the LED display 4 is set in in a seat made in the top surface of the dashboard 3, said seat being closed by means of a panel 9 functioning as filter. The filter 9 is typically made of "darkened" plastic material possibly not shiny and is possibly prearranged so as to be selective in such a way as to allow traversal of only the wavelengths of the light emission of the LEDs 7.

To reduce the angle of emission of the display 4 and prevent the light emitted by the display from reaching the driver directly, it is also possible to use a filter with selective direction. Alternatively, the package of the individual LEDs 7 can be shaped in such a way as to concentrate the light emission principally in the direction perpendicular to the display. From this standpoint, the solution of Figure 4, in which the display 4 is set within the seat 8 presents evident advantages.

The display 4 is made on a flexible substrate so as to be compatible with the shape of the dashboard. Also the deformation of the flexible display can be used and prearranged for compensating for the optical alteration that occurs on the windscreen so as to obtain a desired image. In any case, it is envisaged that the substrate is deformed out of its plane, so that the LEDs of the display are staggered with respect to one another also in the direction orthogonal to said plane in order to compensate at least in part for the optical alteration associated to the reflection on the windscreen.

According to a further preferred characteristic, the LED display 4 is coated with collimation elements (not illustrated), which can be made in any known way and are designed to eliminate the dotted effect in the image generated by the LEDs.

As emerges clearly from the foregoing description, the display device according to the invention presents evident advantages from the standpoint of the reduced dimensions, the ease of integration on the motor vehicle, the extreme simplicity of construction and assembly (without any need for calibration procedures), the ready adaptability of the different models of motor vehicle, and the complete absence of optical systems (lenses/mirrors) for generating the image on the windscreen.

Of course, positioning of the LEDs 7 on the printed circuit 4 is such as to obtain a specular image with respect to the one effectively seen by the driver.

It is moreover evident that, without prejudice to the principle of the invention, the details of construction and the embodiments may vary widely with respect to what has been illustrated purely by way of non-limiting example, without thereby departing from the scope of the present invention as defined in the annexed claims.

## Claims

1. A head-up display device for motor vehicles, comprising means for displaying an image (4b), which, to the eyes of the driver, is superimposed on the windscreen (2) of the motor vehicle, wherein said display means comprise a LED display (4) positioned on the top surface (3a) of the dashboard (3) of the motor vehicle so as to direct light rays (5) directly against the internal surface (2a) of the windscreen (2) of the motor vehicle in order to cause reflection (6) thereof in the direction of the driver, and wherein the LEDs (7) of the LED display (4) are arranged and/or controlled according to the type of optical alteration due to the double reflection on the two opposite surfaces of the windscreen (2) so that the image defined by said LED display (4) is transformed, following upon said optical alteration, into the image that it is desired to make visible to the driver,
said device being **characterized in that** the LED display (4) is made on a flexible substrate and **in that** said substrate is deformed out of its plane so that the LEDs of the display are staggered with respect to one another also in the direction orthogonal to said plane in order to compensate at least in part for the optical alteration associated to the reflection on the windscreen.

2. The device according to Claim 1, **characterized in that** positioned above the aforesaid LED display (4) is a filter (9) provided for allowing traversal of only the radiation of wavelength corresponding to that of the light emission of the LEDs (7).

3. The device according to Claim 1 or Claim 2, **characterized in that** positioned above the aforesaid LED display (4) is a "darkened" filter (9).

4. The device according to any one of the preceding claims, **characterized in that** the LED display (4) is provided on the bottom of a seat (8) made in the top surface (3a) of the dashboard (3), which is closed at the top by said filter (9).

5. The device according to any one of the preceding claims, **characterized in that** set above said LED display (4) is a filter with selective direction.

6. The device according to Claim 1, **characterized in that** each LED (7) of the LED display (4) has a package shaped so as to concentrate the light emission principally in the direction perpendicular to the display (4).

7. The device according to any one of the preceding claims, **characterized in that** the LED display (4) is coated with collimation elements designed to eliminate the dotted effect in the image generated by the LEDs.

## Patentansprüche

1. Einspiegelungssichtgerät für Kraftfahrzeuge, das eine Einrichtung zum Anzeigen eines Bildes (4b) aufweist, welches für den Fahrer sichtbar auf der Windschutzscheibe (2) des Kraftfahrzeugs eingeblendet wird, wobei die Anzeigeeinrichtung eine LED-Anzeige (4) aufweist, die auf der oberen Fläche (3a) des Armaturenbretts (3) des Kraftfahrzeugs so angeordnet ist, dass sie Lichtstrahlen (5) direkt auf die innere Fläche (2a) der Windschutzscheibe (2) des Kraftfahrzeugs richtet, um ihre Reflexion (6) in Richtung des Fahrers herbeizuführen, und wobei die LEDs (7) der LED-Anzeige (4) je nach der Art der optischen Veränderung infolge der doppelten Reflexion auf den zwei gegenüberliegenden Flächen der Windschutzscheibe (2) so angeordnet und/oder gesteuert werden, dass das von der LED-Anzeige (4) definierte Bild im Anschluss an die optische Veränderung in das Bild umgewandelt wird, das dem Fahrer sichtbar gemacht werden soll,
wobei das Gerät **dadurch gekennzeichnet ist, dass** die LED-Anzeige (4) auf einem flexiblen Substrat hergestellt ist, und **dadurch**, dass das Substrat so aus seiner Ebene heraus verformt wird, dass die LEDs der Anzeige in Bezug aufeinander auch in der Richtung im rechten Winkel zu dieser Ebene versetzt angeordnet sind, um die mit der Reflexion auf der Windschutzscheibe verbundene optische Veränderung mindestens zum Teil auszugleichen.

2. Gerät gemäß Anspruch 1, **dadurch gekennzeichnet, dass** über der vorgenannten LED-Anzeige (4) ein Filter (9) angeordnet ist, der die Aufgabe hat, den Durchgang nur der Strahlung einer Wellenlänge zu erlauben, die derjenigen des von den LEDs (7) ausgestrahlten Lichts entspricht.

3. Gerät gemäß Anspruch 1 oder Anspruch 2, **dadurch gekennzeichnet, dass** über der vorgenannten LED-Anzeige (4) ein "abgedunkelter" Filter (9) angeordnet ist.

4. Gerät gemäß einem der vorangegangenen Ansprüche, **dadurch gekennzeichnet, dass** die LED-Anzeige (4) auf der Unterseite eines Sitzes (8) bereitgestellt wird, der in der oberen Fläche (3a) des Armaturenbretts (3) gebildet wird und oben durch den Filter (9) geschlossen wird.

5. Gerät gemäß einem der vorangegangenen Ansprüche, **dadurch gekennzeichnet, dass** über der LED-Anzeige (4) ein Filter mit selektiver Richtung aufgesetzt ist.

6. Gerät gemäß Anspruch 1, **dadurch gekennzeichnet, dass** jede LED (7) der LED-Anzeige (4) ein Paket in der Form besitzt, dass es das ausgestrahlte Licht hauptsächlich in die Richtung senkrecht zur Anzeige (4) konzentriert.

7. Gerät gemäß einem der vorangegangenen Ansprüche, **dadurch gekennzeichnet, dass** die LED-Anzeige (4) mit Kollimationselementen bedeckt ist, die dazu ausgelegt sind, den Tüpfeleffekt in dem von den LEDs erzeugten Bild zu beseitigen.

## Revendications

1. Dispositif d'affichage tête haute pour véhicules à moteur, comprenant des moyens pour l'affichage d'une image (4b), qui, aux yeux du conducteur, est superposée sur le pare-brise (2) du véhicule à moteur, tandis que lesdits moyens d'affichage comprennent un affichage à LED (4) positionné sur la surface supérieure (3a) du tableau de bord (3) du véhicule à moteur de manière à diriger des rayons lumineux (5) directement contre la surface interne (2a) du pare-brise (2) du véhicule à moteur afin de provoquer leur réflexion (6) dans la direction du conducteur, et tandis que les LEDs (7) de l'affichage à LED (4) sont agencées et/ou commandées en fonction du type d'altération optique due à la double réflexion sur les deux surfaces opposées du pare-brise (2) de telle sorte que l'image définie par ledit affichage à LED (4) soit transformée, à la suite de ladite altération optique, en l'image qu'il est souhaité de rendre visible au conducteur, ledit dispositif étant **caractérisé en ce que** l'affichage à LED (4) est réalisé sur un substrat flexible et **en ce que** ledit substrat est déformé en dehors de son plan de telle manière que les LEDs de l'affichage sont décalées l'une par rapport à l'autre également dans la direction orthogonale par rapport audit plan afin de compenser au moins en partie l'altération optique associée à la réflexion sur le pare-brise.

2. Dispositif selon la revendication 1, **caractérisé en ce que**, positionné au-dessus de l'affichage à LED (4) susdit, se trouve un filtre (9) procuré pour permettre la traversée uniquement du rayonnement de longueur d'onde correspondant à celle de l'émission de lumière des LEDs (7).

3. Dispositif selon la revendication 1 ou la revendication 2, **caractérisé en ce que**, positionné au-dessus de l'affichage à LED (4) susdit, se trouve un filtre "obscurci" (9).

4. Dispositif selon l'une quelconque des revendications précédentes, **caractérisé en ce que** l'affichage à LED (4) est procuré sur le fond d'un logement (8) réalisé dans la surface supérieure (3a) du tableau de bord (3), qui est clos à la surface supérieure par ledit filtre (9).

5. Dispositif selon l'une quelconque des revendications précédentes, **caractérisé en ce que**, placé au-dessus dudit affichage à LED (4), se trouve un filtre avec direction sélective.

6. Dispositif selon la revendication 1, **caractérisé en ce que** chaque LED (7) de l'affichage à LED (4) a un module de forme appropriée pour concentrer l'émission de lumière principalement dans la direction perpendiculaire à l'affichage (4).

7. Dispositif selon l'une quelconque des revendications précédentes, **caractérisé en ce que** l'affichage à LED (4) est revêtu avec des éléments collimateurs conçus pour éliminer l'effet de pointillé dans l'image générée par les LEDs.
